# FASCICULE DE BREVET EUROPEEN

(11) **EP 0 569 288 B1**
(45) Date de publication et mention de la délivrance du brevet: **24.09.1997**
(21) Numéro de dépôt: 93401150.3
(22) Date de dépôt: 04.05.1993
(51) Int. Cl.: B64C 27/00, B64C 27/54, G01L 5/04

(54) **Rotor arrière d'hélicoptère à détecteur de dépassement d'un seuil d'effort en translation dans la commande de pas**
Hubschrauberheckrotor mit einem Detektor der Überschreitung einer Verschiebungschwellenspannung in der Steigungsregelung
Helicopter tail rotor with a detector of exceeding a translational stress threshold in the pitch control

(30) Priorité: 06.05.1992 FR 9205593
(43) Date de publication de la demande: 10.11.1993
(73) Titulaire: EUROCOPTER FRANCE, Société Anonyme dite:, F-13725 Marignane Cédex (FR)
(72) Inventeur: Leman, Jean-Luc, F-13100 Aix-en-Provence (FR); Legendre, Philippe, F-13450 Grans (FR); Rampal, Etienne, F-13004 Marseille (FR)
(74) Mandataire: Phélip, Bruno

(56) Documents cités:
- EP-A- 0 006 051
- DE-C- 3 938 986

## Description

La présente invention se rapporte à un rotor arrière anti-couple d'hélicoptère, comprenant des mécanismes de détection du dépassement de seuils d'efforts axiaux appliqués à la commande de pas des pales du rotor.

Sur le moyeu d'un rotor arrière de type articulé d'un hélicoptère, l'articulation de pas de chaque pale est constituée par un palier formant butée, qui peut être réalisé par une batterie de roulements à billes à gorges profondes interposées entre un manchon de liaison à la pale, et une frisée de liaison au corps de moyeu par l'articulation de battement.

Les pistes de ces roulements à billes de l'articulation de pas, qui sont fortement chargées axialement par la force centrifuge en provenance de la pale et qui oscillent autour d'une faible plage angulaire de fonctionnement, ont tendance à se marquer en service dans cette zone. Il en résulte une augmentation qui peut être importante du couple nécessaire à la mise en pas, et par conséquent un accroissement des efforts dans la commande de pas en aval de la servocommande, pouvant conduite à une rupture de cette commande.

Pour surveiller l'état des batteries de roulement, il est usuel de mesurer périodiquement le couple de rotation des manchons à l'arrêt. Cette mesure se révèle délicate et insuffisamment précise, et non représentative du couple en fonctionnement, car la force centrifuge de la pale sur la batterie de roulements est nulle pendant cette opération. De plus, cette vérification est contraignante puisqu'elle nécessite des démontages, l'utilisation d'un peson pour la mesure du couple de rotation des manchons et une interprétation assez délicate des résultats de cette mesure.

Le document EP-A-006.051 divulgue une bielle électrodynamique à seuil d'effort constituant un détecteur de commande électrique de haute sécurité. La bielle comporte une tige mobile capable de coulisser à l'intérieur d'un manchon fixe, selon une direction axiale, ainsi qu'un levier disposé à l'intérieur du manchon. La bielle transforme un mouvement axial de la tige mobile en un mouvement radial du levier, un moyen de déclenchement d'un courant électrique étant actionné lorsque la rotation du levier dépasse un seuil déterminé.

Le document DE-A-3.938.986 décrit quant à lui une composante d'un système à chaîne comportant a dispositif de réduction. Le dispositif de réduction est muni d'un moyen de mesure d'un effort agissant sur le système à chaîne, un interrupteur à pression étant actionné et déclenchant un système électronique lorsque l'effort dépasse une valeur de seuil.

Le but de l'invention est un rotor arrière d'hélicoptère équipé de mécanismes de détection du dépassement de seuils d'efforts axiaux appliqués à la commande de pas des pales du rotor, ces mécanismes évitant les inconvénients mentionnés ci-dessus et étant appropriés au rotor arrière d'hélicoptère.

L'invention vise également un tel rotor comprenant des mécanismes de détection du dépassement de seuils d'efforts, chaque mécanisme de détection étant apte à détecter un seuil d'effort atteint en service qui intervient automatiquement dès que l'effort a dépassé cette valeur de seuil, afin de mettre en évidence un repère facilement contrôlable par le personnel de maintenance tout en utilisant les différents éléments de cette commande mécanique linéaire.

A cet effet, l'invention concerne a rotor arrière d'hélicoptère comportant des pales et un plateau de commande de pas comprenant des bras, chacun des bras étant raccordé à une des pales par l'intermédiaire d'une bielle.

Selon l'invention, le rotor comprend au moins un ensemble mécanique de transmission d'effort suivant un axe et animé d'un mouvement de translation sensiblement axial sous l'effet d'un effort axial. Chacun des ensembles mécaniques est monté pour une des pales, et comprend le bras associé à la pale, émetteur de l'effort axial d'entrée de mouvement, et la bielle associée à la pale, réceptrice de l'effort axial de sortie de mouvement. Cet ensemble comporte un détecteur de dépassement d'un seuil d'effort représenté par une valeur prédéterminée de l'effort axial, le détecteur étant monté sur le bras et comportant une tige traversant le bras, un plateau-support raccordé à la bielle et munissant une des extrémités de la tige, un élément élastique logé dans un boîtier dans la partie externe au bras à l'autre extrémité de la tige, s'appuyant d'une part sur le bras et d'autre part sur le boîtier, des moyens de retenue maintenant en place le boîtier et la tige, et une pièce témoin étant agencés de manière que lorsque l'effort axial dépasse la valeur de seuil, celui-ci agit sur l'élément élastique pour modifier sa dimension axiale et permettre à la pièce témoin de passer à un état d'alerte.

L'état d'alerte peut consister notamment en une position d'alerte de la pièce-témoin, ou en une rupture de cette pièce.

Le rotor arrière anti-couple d'hélicoptère selon l'invention offre l'avantage de permettre de déterminer plus rigoureusement et plus facilement le démontage et la remise en état de la batterie de roulement de l'articulation, lorsque l'effort transmis a dépassé la valeur de seuil prédéterminé. De plus ce système est automatique, et il agit pendant le fonctionnement, en évitant toute mesure ou interprétation délicate par des moyens manuels dont la précision peut varier d'une utilisation à l'autre.

Selon différentes variantes de réalisation de l'invention, la pièce témoin passe à l'état d'alerte sous l'effet de la force centrifuge qui agit sur l'ensemble mécanique, tandis que dans une autre réalisation la pièce témoin passe à l'état d'alerte sous l'effet d'un organe élastique, et qu'enfin une autre possibilité prévoit que la pièce témoin passe à l'état d'alerte sous l'effet de l'effort axial lui-même.

Préférentiellement, l'élément élastique est un ressort de compression, et les moyens d'assemblage de la tige et du boîtier sont constitués par un écrou qui se monte sur l'extrémité filetée de cette tige, l'écrou étant bloquée et rendu indesserrable par une goupille.

Avantageusement, la modification de la dimension axiale de l'élément élastique est de faible valeur et limitée par une butée absolue.

Afin de réaliser le dispositif de butée intégrée à ce détecteur de dépassement du seuil d'effort, ce détecteur comporte de préférence une frette, qui est montée dans un alésage du bras afin d'assurer le passage de la tige. Cette tige peut ainsi coulisser dans cette frette, qui comporte de plus une collerette d'appui sur la face correspondance du bras, de façon que cette collerette reçoive l'élément élastique, qui est ainsi monté entre cette collerette et le boîtier.

La frette comporte de plus, à l'intérieur de l'élément élastique, un prolongement tubulaire dont la longueur est déterminée de telle sorte qu'un jeu soit ménagé entre son extrémité tubulaire et le fond interne du boîtier et que lorsque l'élément élastique est comprimé sur une longueur égale au jeu, le fond du boîtier vienne en appui sur l'extrémité de la frette, ce qui limite alors de façon absolue et à la seule faible valeur du jeu le déplacement relatif du bras par rapport à la bielle.

Afin d'améliorer la précision du mécanisme de détection du dépassement d'un seuil d'effort du rotor selon l'invention, ce détecteur de dépassement du seuil d'effort comporte des moyens de réglage du jeu de ce détecteur, qui correspond à la modification souhaitée de la dimension axiale de l'élément élastique, par exemple du ressort de compression, permettant à la pièce témoin de passer à l'état d'alerte.

Préférentiellement, ces moyens de réglage du jeu du détecteur de déplacement du seuil d'effort consistent en une rondelle de réglage, qui est traversée par la tige, et qui est disposée entre le boîtier et l'élément élastique, c'est-à-dire par exemple du ressort de compression, permettant à la pièce témoin de passer à l'état d'alerte.

Selon une variante de réalisation du rotor selon l'invention, la pièce témoin est constituée par une plaquette circulaire qui est traversée par la tige, et qui est montée entre le plateau-support et le bras. Cette pièce témoin est disposée à l'intérieur du boîtier, et elle comporte une languette externe à ce boîtier et qui est située dans un plan sensiblement perpendiculaire à la plaquette circulaire. De plus, cette languette est disposée juste en face d'une zone de boîtier qui est munie d'une marque. Ainsi, lorsque l'effort axial dépasse la valeur de seuil, la pièce témoin est alors libérée en rotation, et elle tourne sous l'effet de la force centrifuge qui s'applique sur l'ensemble de la commande mécanique linéaire, pour venir buter contre le boîtier dans une position d'alerte correspondant à l'état d'alerte, en dégageant de ce fait la zone du boîtier munie de la marque.

Selon un autre mode de réalisation du rotor selon l'invention, la pièce témoin est constituée par une plaquette, qui est traversée par la tige, et elle est montée entre le plateau-support et le bras. Cette pièce témoin traverse de chaque côté le boîtier, et elle comporte d'une part deux languettes qui sont l'une et l'autre dans un plan sensiblement perpendiculaire à la plaquette, et d'autre part elle comporte un retour d'arrêt. Chacune de ces deux plaquettes est située en face d'une zone munie d'une marque qui appartient au bras. De plus le trou de passage de la tige aménagé dans la plaquette a une forme oblongue. Ainsi, lorsque l'effort axial dépasse la valeur de seuil, la pièce témoin est alors libérée et elle se déplace sous l'effet de la force centrifuge qui s'applique sur la commande mécanique linéaire. La pièce témoin se déplace pour venir buter contre la tige par l'intermédiaire de l'autre côté du trou oblong, dans une position d'alerte qui correspond à l'état d'alerte, ce qui dégage les deux zones marquées sur le bras. Selon un autre mode de réalisation du rotor de l'invention, la pièce témoin est constituée par une plaquette qui est montée dans un plan sensiblement perpendiculaire au plateau-support et solidaire de ce plateau-support. Cette plaquette a une extrémité élastique, qui est maintenue en place par un élément de retenue. Cet élément de retenue est traversé par la tige et il est monté entre le plateau et le bras. De plus, l'élément de retenue a un bord coudé, qui retient et qui maintient en position l'extrémité élastique de la plaquette. Ainsi, lorsque l'effort axial dépasse la valeur de seuil, la pièce témoin a son extrémité élastique qui s'échappe de l'élément de retenue, pour venir en position d'alerte.

Selon un autre mode de réalisation du rotor de l'invention, la pièce témoin est constituée par une plaquette fixée à ses deux extrémités d'une part sur un prolongement de la frette et d'autre part sur un prolongement du boîtier. Cette plaquette est située dans un plan qui est sensiblement parallèle à l'axe du déplacement. Ainsi, lorsque l'effort axial dépasse la valeur de seuil, la pièce témoin a sa section placée entre les points de fixation, qui se brisent, ce qui correspond à l'état d'alerte.

Avantageusement, le détecteur de dépassement du seuil d'effort a son plateau-support qui comporte deux branches, sensiblement perpendiculaires à celui-ci, de façon à constituer une chape. Cette chape reçoit la bielle de commande de pas de la pale correspondante, par l'intermédiaire d'un axe d'articulation. Cet axe d'articulation est bloqué sur la chape par un écrou freiné par une goupille. De plus, la chape est orientée par rapport au bras du plateau de commande au moyen d'un élément d'orientation.

Dans la variante de réalisation du détecteur de dépassement du seuil d'effort de l'invention, qui comporte une pièce témoin constituée par une plaquette montée dans un plan sensiblement perpendiculaire au plateau, cette plaquette est traversée par l'axe d'articulation de la bielle de commande de pas, et elle est bloquée par l'écrou de cet axe d'articulation.

D'autre avantages ressortiront de l'invention, qui sera mieux comprise à l'aide de la description donnée ci-dessous d'exemples particuliers de réalisations, décrits à titre non limitatif en référence aux dessins annexés sur lesquels:
- la figure 1 est une vue en perspective de l'ensemble du moyeu d'un rotor arrière anti-couple d'un hélicoptère, sur lequel peut se monter le mécanisme de détection du dépassement d'un seuil d'effort selon l'invention;
- la figure 2 est une coupe axiale du rotor arrière représenté sur la figure 1, dans lequel a été disposé un détecteur de dépassement d'un seuil d'effort selon l'invention;
- la figure 3 est une coupe axiale de l'ensemble d'un détecteur de dépassement d'un seuil d'effort selon l'invention monté sur un rotor arrière d'hélicoptère représenté sur les figures 1 et 2;
- la figure 4 est une coupe suivant IV-IV de la figure 3.
- la figure 5 est une vue de dessus de la figure 3;
- la figure 6 est une coupe axiale analogue à la figure 3 d'un autre mode de réalisation d'un détecteur d'un seuil d'effort selon l'invention;
- la figure 7 est une coupe VII-VII de la figure 6;
- la figure 8 est une coupe analogue à la figure 3 d'un autre mode de réalisation d'un détecteur d'un seuil d'effort selon l'invention;
- la figure 9 est une coupe suivant IX-IX de la figure 8;
- la figure 10 est une coupe analogue à la figure 3 d'un autre mode de réalisation d'un détecteur de dépassement d'un seuil d'effort selon l'invention.

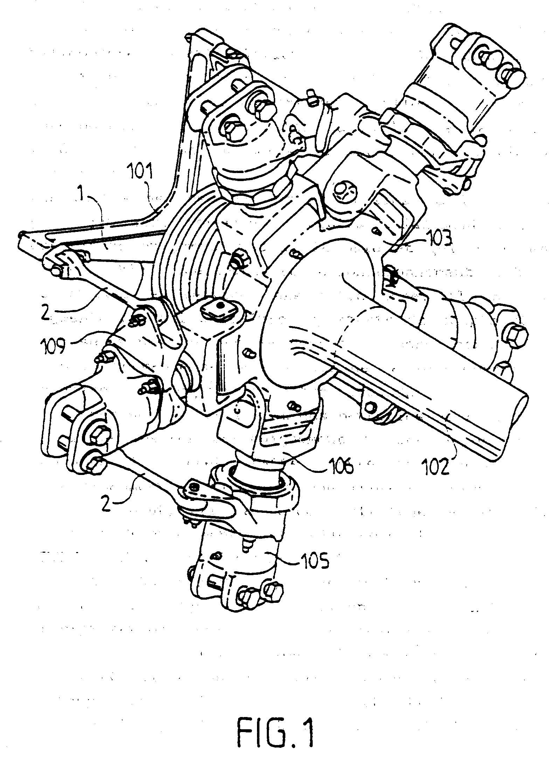

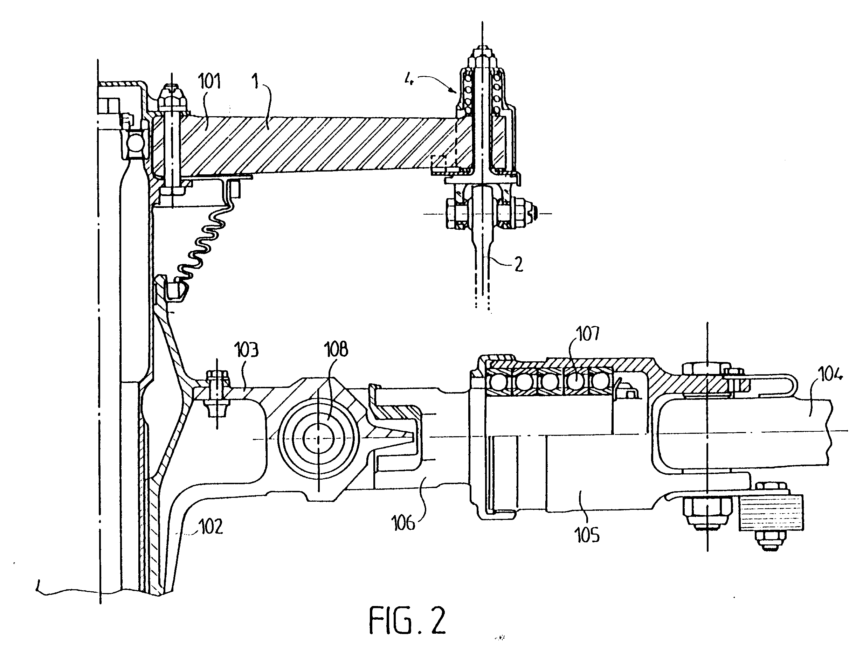

- La figure 1 représente en perspective le moyeu rotor arrière quintupale d'un hélicoptère, et la figure 2 représente ce même rotor arrière en coupe axiale. Ce rotor arrière comporte un arbre moteur 102 portant un corps de moyeu 103 raccordé à chacune des cinq pales 104 par l'intermédiaire d'un manchon de liaison 105 à la pale 104, et d'une fusée de liaison 106 au corps de moyeu 103. Un plateau de commande de pas 101 est monté à l'extrémité d'un arbre porté par l'arbre moteur 102, et il comporte cinq bras 1 correspondant à chacune des pales 104. Sur chacun des manchons de liaison 105 à la pale 104 est fixé un levier de pas 109, qui est raccordé au bras 1 correspondant du plateau de commande 101 par une bielle 2. L'articulation de pas de chaque pale 104 est constituée par un palier formant butée, qui est réalisée par une batterie de cinq roulements à billes 107 à gorge profonde interposée entre le manchon de liaison 105 à la pale 104 correspondante, et la fusée de liaison 106 au corps de moyeux 103 par l'articulation de battements 108.

Chacun des bras 1 du plateau de commande 101 et la bielle correspondante 2 avec ses pièces de liaison constitue un ensemble mécanique, qui a un axe de transmission et qui est animé d'un mouvement de translation sensiblement axial, c'est-à-dire parallèle à l'axe du rotor arrière. Ce mouvement de translation est effectué sous l'effet d'un effort axial qui provient du plateau de commande 101, et qui est transmis au bras 1 correspondant. Chacun de ces ensembles mécaniques comporte ainsi une pièce émettrice de l'effort axial de l'entrée de mouvement qui est le bras 1 du plateau de commande 101, et une pièce réceptrice de l'effort axial de sortie de mouvement, qui est la bielle 2 de commande de pas de la pale correspondante. Sur chacun de ces ensembles mécaniques, est disposé selon l'invention un détecteur 4 de dépassement d'un seuil d'effort représenté par une valeur prédéterminée de l'effort axial.

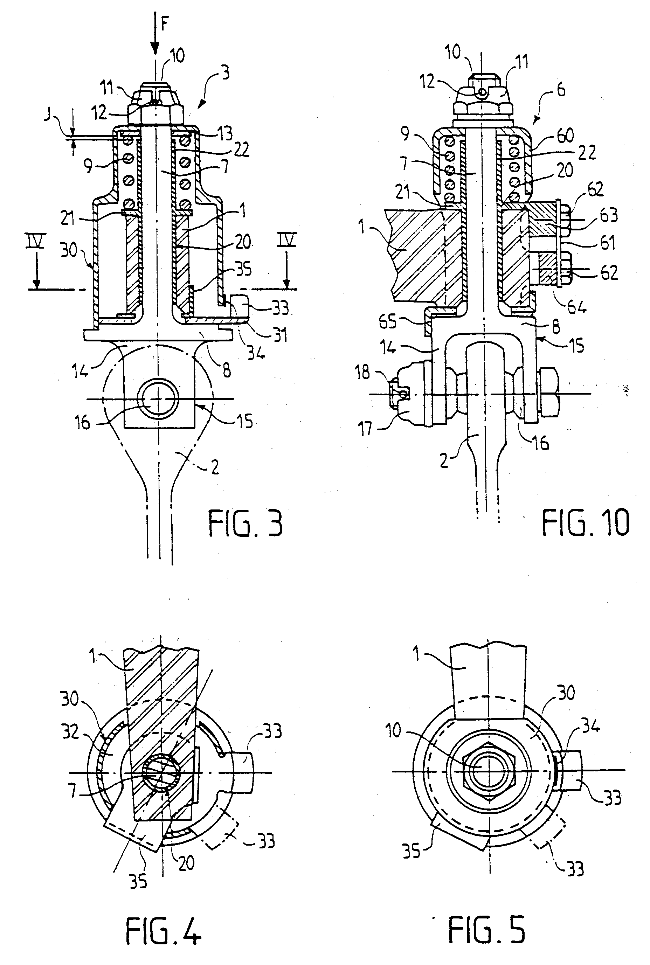

La figure 3 représente un premier mode de réalisation de l'invention, avec un détecteur référencé 3 dans son ensemble de dépassement du seuil d'effort, l'ensemble mécanique étant représenté dans une coupe axiale et suivant un plan perpendiculaire au plan radial du bras 1 correspondant. Un détecteur 3 de dépassement du seuil d'effort est monté sur chacun des bras 1 du plateau de commande 101, et il comporte une tige 7 avec une frette 20, un élément élastique du type ressort de compression 9, un boîtier 30, et une pièce témoin 31. La frette 20 est montée dans un alésage aménagé à cet effet dans le bras 1, et elle reçoit la tige 7 qui la traverse et dans laquelle elle peut librement coulisser. La tige 7 est munie à une de ses extrémités d'un plateau 8 raccordé à la pièce réceptrice c'est-à-dire à la bielle 2, et qui reçoit à son autre extrémité, dans la partie externe au bras 1, le ressort de compression 9, qui s'appuie d'une part sur le bras 1, et qui s'appuie d'autre part sur le fond du boîtier 30. Ce boîtier 30 et la tige 7 sont maintenus en place par des moyens de tenue, qui sont constitués par un écrou 11 se montant sur l'extrémité filetée 10 de la tige 2. De plus cet écrou 11 est bloqué et rendu indesserable par une goupille 12.

Le plateau 8 comporte deux branches 14, qui sont sensiblement perpendiculaires à ce plateau 8, de façon à constituer une chape 15. Cette chape 15 reçoit la bielle 2 par l'intermédiaire d'un axe d'articulation 16, qui est bloqué sur cette chape 15. De plus, la chape 15 est orientée par rapport au bras 1 du plateau de commande 101 au moyen d'une plaquette d'orientation 35.

La frette 20 est montée à force dans l'alésage correspondant du bras 1 du plateau de commande 101, et elle comporte une collerette 21 qui vient s'appliquer contre la face correspondante du bras 1, de façon que cette collerette puisse recevoir le ressort de compression 9. De l'autre coté de l'alésage aménagé dans ce bras 1, sont disposées la plaquette d'orientation 35, et la pièce témoin 31 qui sont traversées l'une et l'autre par la tige 7, qui vient s'engager et coulisser dans la frette 20. Le boîtier 30 vient refermer l'ensemble de ces pièces, et sert de logement au ressort de compression 9, et il est bloqué sur la tige 7 par l'intermédiaire de l'écrou 11 et de la goupille 13.

La frette 20 comporte de plus au delà de la collerette 21 à l'intérieur du ressort de compression 9, un prolongement tubulaire 22 dont la longueur est déterminée de telle sorte que lorsque le boîtier 30 est en place en appui sur le plateau 8, un jeu "J" soit ménagé entre l'extrémité tubulaire 22 de la frette 20 et le fond interne du boîtier 30.

Lorsque l'effort axial transmis par le bras 1 à la bielle 2 par l'intermédiaire de la tige 7 dépasse la valeur prédéterminée du seuil d'effort, l'élément élastique c'est-à-dire le ressort de compression 9 est comprimé, de manière que la modification de sa dimension axiale permette à la pièce témoin 31 de se mettre en position d'alerte.

Lorsque la course de compression du ressort atteint une valeur égale au jeu ménagé entre l'extrémité du prolongement tubulaire de la collerette 22 et le fond du boîtier 30, ce dernier vient en appui sur l'extrémité de la frette ce qui limite alors de façon absolue le déplacement relatif du plateau de commande 101 par rapport à la bielle 2.

Afin d'améliorer la précision de ce détecteur suivant l'invention, il est prévu des moyens de réglage du jeu qui consistent en une rondelle de réglage 13. Cette rondelle de réglage est traversée par la tige 7, et elle disposée entre le boîtier 30 et le ressort de compression 9. La longueur de la partie de la frette 20 qui reçoit ce ressort de compression 9, est déterminé de manière que cette rondelle 13 vienne en butée contre l'extrémité de la frette 20, après une course qui correspond à la modification souhaitée de la dimension axiale du ressort de compression 9, c'est-à-dire au jeu du détecteur de dépassement du seuil d'effort qui permet à la pièce témoin 31 de se mettre en position d'alerte.

La pièce témoin 31 du détecteur 3 de dépassement du seuil d'effort est constituée par une plaque circulaire 32 qui peut tourner dans le boîtier 30. Cette plaquette circulaire 32 est traversée par la tige 7, et elle est montée entre le plateau 8 et la plaquette d'orientation 35 de la bielle 2. Cette pièce témoin 31 comporte une languette 33 externe au boîtier 30 qui est aménagée à la périphérie de la plaquette circulaire 32, et qui passe au travers d'une lumière aménagée sur le boîtier 30. Cette languette 33 est située dans un plan sensiblement perpendiculaire à la plaquette circulaire 32, et elle est située en face d'une zone 34 aménagée sur le boîtier 30. Cette zone 34 est munie d'une marque qui peut être par exemple un témoin de couleur rouge. Lorsque l'effort axial dépasse la valeur de seuil prédéterminée, la pièce témoin 31 est alors libérée en rotation du fait de la compression du ressort 9 d'une valeur égale au jeu du détecteur, et cette pièce témoin 31 peut ainsi tourner sous l'effet de la force centrifuge, afin de venir buter contre l'autre face de la lumière de passage de la languette 33 dans la position correspondant à la position d'alerte qui est représentée en pointillés sur les figures 4 et 5. Cette languette 33 en se mettant dans cette position dégage la zone 34 du boîtier 30 qui apparaît ainsi après l'arrêt du rotor à l'opérateur chargé des contrôles du dispositif.

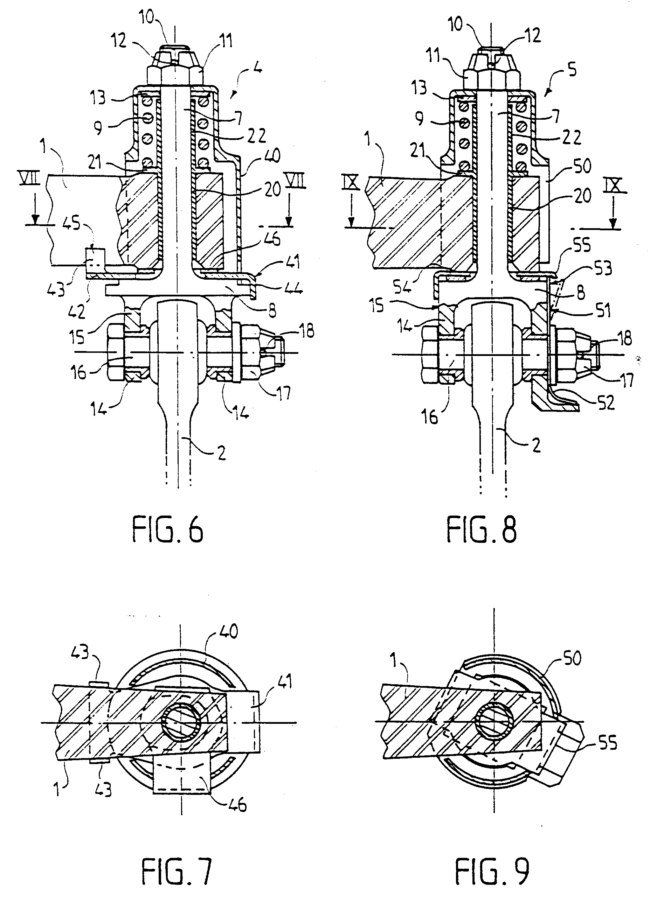

Un autre mode de réalisation de l'invention, qui se rapporte également à la commande du pas des pales d'un rotor anti-couple d'hélicoptere, est représenté sur les figures 6 et 7. Le détecteur de déplacement du seuil d'effort référencé 4 dans son ensemble à une structure analogue au détecteur 3 décrit ci-dessus. Ce détecteur du seuil de dépassement 4 comporte donc une frette 20 avec sa collerette 21 et son prolongement 22 montée dans le bras 1 du plateau de commande, et dans laquelle coulisse la tige 7. La tige 7 est munie également à l'une de ses extrémités du plateau 8 raccordé à la bielle de commande de pas 2, et elle a à son autre extrémité un ressort de compression 9 s'appuyant d'une part sur la collerette 21 de la frette 20, et d'autre part sur un boîtier 40, qui est maintenu en place avec le ressort de compression 9 au moyen de l'écrou 11 avec la goupille 12 qui se monte sur l'extrémité filetée 10 de la tige 2. Comme dans le cas précédent, le plateau 8 de la tige 7 comporte deux branches 14 sensiblement perpendiculaires à ce plateau 8, afin de constituer une chape 15 qui reçoit la bielle 2 de commande de pas par l'intermédiaire de l'axe d'articulation 16. Cet axe d'articulation 16 est bloqué sur la chape 15 par un écrou 17 avec une goupille 18. De plus la chape 15 est orientée par rapport au bras 1 du plateau de commande au moyen d'une plaquette d'orientation 46.

Comme dans le cas précédent, le détecteur de dépassement du seuil d'effort référencé 4 comporte la rondelle de réglage 13, qui est traversée par la tige 7, et qui est disposée entre le boîtier 40 et le ressort de compression 9.
Dans ce mode de réalisation de l'invention, la pièce témoin 41 de ce détecteur 4 de dépassement du seuil d'effort est constituée par une plaquette 42 qui est traversée par la tige 7. Cette plaquette 42 est montée entre le plateau 8, et la plaquette d'orientation 46 qui s'applique contre le bras 1 du plateau de commande 101. Comme on peut le voir sur la figure 7, cette pièce témoin 41 est conçue de manière à traverser de chaque côté, c'est-à-dire à chacune de ses extrémités le boîtier 40, dans lequel sont ménagées des lumières de passage correspondante. Cette pièce témoin 41 comporte d'une part à l'une de ses extrémités deux languettes référencées 43, et d'autre part à son autre extrémité un retour d'arrét 44. Chacune des deux languettes 43 est située en face d'une zone 45 aménagée sur le bras 1 du plateau de commande 101. Cette zone est munie d'une marque c'est-à-dire plus précisément d'un repère rouge. D'autre part le trou de passage de la tige 7, qui est aménagé dans la plaquette 42 a une forme oblongue. A l'autre extrémité de la plaquette, le retour d'arrêt 44 vient s'appliquer à la périphérie du plateau 8 de la tige 7. Enfin la plaquette d'orientation 46 qui est traversée par la tige 7, a à chacune des extrémités un retour qui s'applique d'une part sur un des côtés du bras 1 du plateau de commande 101, et d'autre part sur un méplat aménagé à la périphérie du plateau 8 de la tige 7. De cette manière la bielle de commande de pas 2 est orientée suivant l'angle désiré par rapport au bras 1 du plateau de commande 101.

Dans ce type de détecteur de dépassement du seuil d'effort référencé 4, la pièce témoin 41 est libérée lorsque l'effort axial dépasse la valeur de seuil prédéterminée. Cette pièce témoin 41 se déplace alors sous l'effet de la force centrifuge pour venir buter contre la tige 7 par l'intermédiaire de l'autre coté du trou oblong, c'est-à-dire du côté du trou oblong situé à proximité des deux languettes 43. Lorsque cette face du trou oblong bute contre la tige 7, la pièce témoin 41 est alors mise en position d'alerte, et de ce fait elle a dégagé les deux zones 45 marquées en rouge du bras 1, qui apparaissent ainsi immédiatement à l'opérateur chargé du contrôle.

Le mode de réalisation de l'invention représenté sur les figures 8 et 9, se rapporte également à la commande du pas des pales d'un rotor anti-couple d'hélicoptère, et il comporte un détecteur de dépassement du seuil d'effort référencé 5 dans son ensemble, qui a une structure voisine des détecteurs 3 et 4 décrits précédemment. Ce détecteur de dépassement du seuil d'effort 5 comporte la frette 20 avec sa collerette 21, et son prolongement 22, dans laquelle coulisse la tige 7 portant d'une part le plateau 8 raccordé à la bielle de commande de pas 2, et portant d'autre part à son autre extrémité un boîtier 50 dans lequel est logé le ressort de compression 9 monté sur la frette 20. L'ensemble est bloqué au moyen de l'écrou 11, avec une goupille 12 qui sont montés sur l'extrémité filetée 10 de cette tige 7. Comme dans le cas des détecteurs de dépassement du seuil d'effort référencés 3 et 4, le détecteur de dépassement du seuil et d'effort référencé 5 comporte la rondelle de réglage 13 qui est traversée par la tige 7, et qui est disposée entre le boîtier 50 et le ressort de compression 9. Dans ce détecteur de dépassement du seuil d'effort 50, la pièce témoin référencée 51 est constituée par une plaquette 52, qui est montée dans un plan sensiblement perpendiculaire au plateau 8. Cette plaquette 52 est de plus solidaire de ce plateau 8, en utilisant l'axe d'articulation 16 de la bielle de commande de pas 2 qui traverse cette plaquette 52. La plaquette 52 est de ce fait bloquée entre l'écrou 17 de l'axe d'articulation 16, et une des deux branches 14 sensiblement perpendiculaire au plateau 8 qui constituent l'une et l'autre la chape 15 destinée à recevoir la bielle 2 par l'intermédiaire de l'axe d'articulation 16.

Selon l'invention, cette plaquette 52 a une extrémité élastique 53, qui est maintenue en place par un élément de retenue 54. Cet élément de retenue 54 est traversé par la tige 7 et il est disposé entre le plateau 8 de la tige 7, et le bras 1 du plateau de commande 101. Cet élément de retenue 54 a d'une part un bord coudé 55, qui vient retenir et maintenir en position l'extrémité élastique 53 de la plaquette 52. D'autre part cet élément de retenue 54 comporte également à son autre extrémité un bord coudé 56 qui vient s'appuyer sur un méplat disposé à la périphérie du plateau 8 dans le prolongement de la branche 14 de la chape 15, afin d'orienter convenablement la bielle 2 de commande de pas. L'autre branche 14 de la chape 15 sur laquelle s'applique la pièce témoin 51 a une extrémité coudée, contre laquelle s'applique l'extrémité correspondante de la plaquette 52 de la pièce témoin 51. Lorsque l'effort axial dépasse la valeur de seuil prédéterminée, la pièce témoin 51 a son extrémité élastique qui s'échappe de l'élément de tenue, pour venir en position d'alerte.

La figure 10 représente un autre mode de réalisation de l'invention qui se rapporte également à la commande du pas des pales d'un rotor anti-couple d'hélicoptère. Dans ce mode de réalisation, un détecteur de dépassement du seuil d'effort référencé 6 dans son ensemble, est monté sur le bras 1 du plateau de commande 101, ce détecteur de dépassement du seuil d'effort 6 comporte une frette 20 avec sa collerette 21 et son prolongement 22, qui reçoit la tige 7 munie de son plateau 8 avec son extrémité filetée 10. Le ressort de compression 9 est également monté sur la frette 20, et il est logé dans un boîtier 60 qui est bloqué par l'écrou 11 avec la goupille 12. De la même manière que dans les cas décrits et illustrés précédemment, le plateau s comporte deux branches 14 qui constituent la chape 15 destinée à recevoir la bielle de commande de pas 2 par l'intermédiaire de l'axe d'articulation 16 munie de son écrou de blocage 17 et de sa goupille 18. Afin d'orienter convenablement cette bielle de commande de pas 2, le dispositif comporte un élément de tenue et d'orientation 65, qui comporte à chacune de ses extrémités un bord retourné afin de s'appliquer d'une part sur un des cotés du bras 1, et d'autre part sur un méplat disposé à la périphérie du plateau 8 dans le prolongement de la branche 14 correspondante.

Dans ce mode de réalisation de l'invention, la pièce témoin 61 du détecteur de dépassement du seuil d'effort 6 est constituée par une plaquette réalisée en un matériau non ductile et de faible résistance mécanique qui est fixée à ses deux extrémités par une vis 62. Une des extrémités de la pièce témoin 61 s'applique et est fixée sur un prolongement 64 du boîtier 60, et l'autre extrémité s'applique et est fixée sur un prolongement 63 de la frette 20, et plus précisément dans la zone de la collerette 21. Cette pièce témoin 61 est ainsi disposée dans un plan sensiblement parallèle à l'axe du déplacement, c'est-à-dire à l'axe de la tige 7. Lorsque l'effort axial transmis par le mécanisme dépasse la valeur de seuil prédéterminée, la pièce témoin a sa section disposée entre les points de fixation matérialisés par les vis 62 et se brise. La rupture de la pièce témoin 61 correspond alors à la position d'alerte du dispositif.

Dans une variante de réalisation, la plaquette réalisée en un matériau non ductile et de faible résistance mécanique peut comporter de plus un circuit conducteur électrique solidarisé avec ladite plaquette soit en surface de celle-ci, soit en lui étant intégré de telle sorte que la rupture de cette pièce témoin interrompt le circuit électrique et que cette interruption puisse déclencher un dispositif d'alerte et/ou être enregistré dans l'enregistreur de bord.

En se reportant à tous les cas décrits précédemment, on constate que les différents modes de réalisations fonctionnent de la même façon, c'est-à-dire que sous effort en traction, la bielle de commande de pas 2 sollicite en compression le ressort 9, qui est déjà comprimé suivant un effort de tarage compatible avec la résistance mécanique des pièces de la chaîne de commande en aval de la servocommande de l'ensemble du système. Dès que la sollicitation de la bielle de commande de pas 2 dépasse l'effort de tarage du ressort de compression 9, il y a poursuite de la compression de ce ressort 9 jusqu'à la butée du fond de boîtier 30 sur l'extrémité du prolongement 22 de la frette 20. Ceci entraîne un décollement sous charge axiale de la pièce témoin 31, 41, 51, ou 61, qui peut alors tourner ou se translater suivant les cas sous l'action du champ centrifuge. Les languettes de ces pièces témoin occupent alors une nouvelle position, qui démasquent le ou les repères rouges peints sur un tableau de commande au boîtier, la pièce témoin reste alors dans cette position qu'elle a prise dès que l'effort sur la bielle devient inférieur à l'effort de tarage du ressort de compression 9, jusque et y compris à l'arrêt du rotor. Dans ce cas il faudra alors intervenir au plus vite sur la batterie des roulements 107 correspondants.

Il faut noter qu'en restant dans le cadre de l'invention, la pièce témoin peut se mettre en position d'alerte sous l'effet d'un organe élastique, telle qu'un ressort, ou bien la pièce témoin peut se mettre en position d'alerte sous l'effet de la force centrifuge comme cela a été décrit précédemment, et enfin la pièce témoin peut également se mettre en position d'alerte sous l'effet de l'effort axial comme dans le cas représenté sur la figure (10).

Ainsi le dispositif de l'invention s'applique particulièrement bien à celui qui consiste à contrôler de façon permanente l'état de santé des articulations de pas d'un moyeu de rotor arrière d'hélicoptère, et il répond exactement aux nouvelles exigences de certification qui imposent un système de contrôle de l'état de santé et de l'usage, dont il constitue un élément actif.

## Revendications

1. Rotor arrière d'hélicoptère comportant des pales (104) et un plateau de commande (101) de pas comprenant des bras (1), chacun des bras (1) étant raccordé à une des pales (104) par l'intermédiaire d'une bielle (2), caractérisé en ce que ledit rotor comprend au moins un ensemble mécanique de transmission d'effort suivant un axe et animé d'un mouvement de translation sensiblement axial sous l'effet d'un effort axial, chacun desdits ensembles mécaniques étant monté pour une des pales (104), et comprenant le bras (1) associé à ladite pale (104), émetteur de l'effort axial d'entrée de mouvement, et la bielle (2) associée à ladite pale (104), réceptrice de l'effort axial de sortie de mouvement, ledit ensemble comportant un détecteur (3, 4, 5, 6) de dépassement d'un seuil d'effort représenté par une valeur prédéterminée de l'effort axial, le détecteur (3, 4, 5, 6) étant monté sur le bras (1) et comportant une tige (7) traversant le bras (1), un plateau-support (8) raccordé à la bielle (2) et munissant une des extrémités de la tige (7), un élément élastique (9) logé dans un boîtier (30, 40, 50, 60) dans la partie externe au bras (1) à l'autre extrémité de la tige (7), s'appuyant d'une part sur le bras (1) et d'autre part sur le boîtier (30, 40, 50, 60), des moyens de retenue (10, 11, 12) maintenant en place le boîtier et la tige, et une pièce témoin (31, 41, 51, 61), la tige (7) et la pièce témoin (31, 41, 51, 61) étant agencées de manière que lorsque l'effort axial dépasse la valeur de seuil, celui-ci agit sur l'élément élastique (9) pour modifier sa dimension axiale et permettre à la pièce témoin (31, 41, 51, 61) de passer à un état d'alerte.

2. Rotor selon la revendication 1, caractérisé en ce que la pièce témoin (31, 41) passe à l'état d'alerte sous l'effet de la force centrifuge.

3. Rotor selon la revendication 1, caractérisé en ce que la pièce témoin (51) passe à l'état d'alerte sous l'effet d'un organe élastique (53).

4. Rotor selon la revendication 1, caractérisé en ce que la pièce témoin (61) passe à l'état d'alerte sous l'effet de l'effort axial.

5. Rotor selon l'une quelconque des revendications précédentes, caractérisé en ce que l'élément élastique (9) du détecteur de dépassement du seuil d'effort est un ressort de compression.

6. Rotor selon l'une quelconque des revendications précédentes, caractérisé en ce que les moyens de tenue de la tige et du boîtier sont constitués par un écrou (11) se montant sur l'extrémité filetée (10) de la tige (2), l'écrou (11) étant bloqué et étant rendu indesserrable par une goupille (12).

7. Rotor selon l'une quelconque des revendications précédentes, caractérisé en ce que la modification de la dimension axiale de l'élément élastique (9) est de faible valeur et limitée par une butée absolue.

8. Rotor selon la revendication 7, caractérisé en ce que le détecteur (3, 4, 5, 6) de dépassement du seuil d'effort comporte une frette (20) montée dans un alésage du bras (1) et assurant le passage de la tige (7), qui coulisse ainsi dans cette frette (20), ladite frette (20) comportant d'une part une collerette d'appui (21) sur la surface correspondante du bras (1) de façon que cette collerette (21) reçoive l'élément élastique (9) et d'autre part au-delà de la collerette (21), un prolongement tubulaire (22) dont la longueur est telle que lorsque le boîtier (30, 40, 50, 60) est en place en appui sur le plateau-support (8), un jeu soit ménagé entre l'extrémité du prolongement tubulaire (22) de la frette (20) et le fond interne du boîtier (30, 40, 50, 60).

9. Rotor selon la revendication 8, caractérisé en ce que le détecteur (3 4, 5) de dépassement du seuil d'effort comporte des moyens de réglage du jeu de ce détecteur, qui correspond à la modification souhaitée de la dimension axiale de l'élément élastique (9) permettant à la pièce témoin (31, 41, 51) de passer à l'état d'alerte.

10. Rotor selon la revendication 9, caractérisé en ce que les moyens de réglage du jeu du détecteur (31, 41 51) de dépassement du seuil d'effort consistent en une rondelle de réglage (13) traversée par la tige (7) et disposée entre le boîtier (30, 40, 50) et l'élément élastique (9), cette rondelle (13) coopérant avec l'extrémité (22) de la frette (20) en venant buter contre cette extrémité après une course correspondant à la modification souhaitée de la dimension axiale de l'élément élastique (9) permettant à la pièce témoin (31, 41, 51) de passer à l'état d'alerte.

11. Rotor selon l'une quelconque des revendications précédentes, caractérisé en ce que la pièce témoin (31) du détecteur (3) de dépassement du seuil d'effort est constituée par une plaquette circulaire (32) traversée par la tige (7) et montée entre le plateau-support (8) et le bras (1), cette pièce témoin (31) étant disposée à l'intérieur du boîtier (30) et comportant une languette (33) externe au boîtier (30) dans un plan sensiblement perpendiculaire à la plaquette circulaire (32), cette languette (32), étant située en face d'une zone (34) du boîtier munie d'une marque, de manière que lorsque l'effort axial dépasse la valeur de seuil, la pièce témoin (31) est alors libérée en rotation et elle tourne sous l'effet de la force centrifuge pour venir buter contre le boîtier (30) dans une position d'alerte correspondante à l'état d'alerte en dégageant la zone (34) du boîtier (30).

12. Rotor selon l'une quelconque des revendications 1 à 10, caractérisé en ce que la pièce témoin (41) du détecteur (4) de dépassement du seuil d'effort est constituée par une plaquette (42) traversée par la tige (7) et montée entre le plateau-support (8) et le bras (1), cette pièce témoin (41) traversant de chaque côté le boîtier (40) et comportant d'une part deux languettes (43) dans un plan sensiblement perpendiculaire à la plaquette (42) et d'autre part un retour d'arrêt (44), chacune des deux languettes (43) étant située en face d'une zone (45) munie d'une marque du bras (1) et le trou de passage de la tige (7) aménagé dans la plaquette (42) étant oblong, de manière que lorsque l'effort axial dépasse la vapeur de seuil, la pièce témoin (41) est alors libérée et elle se déplace sous l'effet de la force centrifuge pour venir buter contre la tige (7) par l'intermédiaire de l'autre côté du trou oblong, dans une position d'alerte qui correspond à l'état d'alerte, en dégageant les deux zones (45) marquées du bras (1).

13. Rotor selon l'une quelconque des revendications 1 à 10, caractérisé en ce que la pièce témoin (51) du détecteur (5) de dépassement du seuil d'effort est constituée par une plaquette (52), montée dans un plan sensiblement perpendiculaire au plateau-support (8) et solidaire de ce plateau-support (8), cette plaquette (52) ayant une extrémité élastique (53) qui est maintenue en place par un élément de tenue (54) traversé par la tige (7) et monté entre le plateau-support (8) et le bras (1), ledit élément de tenue (54) ayant un bord coudé (55) retenant et maintenant en position l'extrémité élastique (53) de la plaquette (52) de manière que lorsque l'effort axial dépasse la valeur de seuil, la pièce témoin (51) a son extrémité élastique (53) qui s'échappe de l'élément de tenue (54) pour venir en position d'alerte.

14. Rotor selon l'une quelconque des revendications 8 à 10, caractérisé en ce que la pièce témoin (61) du détecteur (6) de dépassement du seuil d'effort est constitué par une plaquette réalisée en un matériau non ductile et de faible résistance mécanique et qui est fixée à ses deux extrémités d'une part sur un prolongement (63) de la frette (20) et d'autre part sur un prolongement (64) du boîtier (60), cette plaquette étant située dans un plan sensiblement parallèle à l'axe du déplacement, de manière que lorsque l'effort axial dépasse la valeur de seuil, la section de la pièce témoin (61) placée entre les points de fixation se brise, ce qui correspond à l'état d'alerte.

15. Rotor selon la revendication 14, caractérisé en ce que la plaquette (61) en un matériau non ductile et de faible résistance mécanique comporte de plus un circuit électrique solidarisé avec ladite plaquette suivant sa dimension longitudinale de telle sorte que la rupture de cette pièce témoin interrompt le circuit électrique et que cette interruption déclenche un dispositif d'alerte à distance.

16. Rotor selon l'une quelconque des revendications précédentes, caractérisé en ce que le détecteur de dépassement du seuil d'effort a son plateau-support (8) qui comporte deux branches (14) sensiblement perpendiculaires à ce plateau-support (8) de manière à constituer une chape (15), qui reçoit la bielle (2) par l'intermédiaire d'un axe d'articulation (16) bloqué sur cette chape (15) par un écrou (17) avec une goupille (18), cette chape (15) étant orientée par rapport au bras (1) du plateau de commande (101) au moyen d'un élément d'orientation (35, 46, 56, 65).

17. Rotor selon les revendications 13 et 16, caractérisé en ce que la pièce témoin (51) constituée par la plaquette (52) est traversée par l'axe d'articulation (16) de la bielle (2), et qu'elle est bloquée par l'écrou (17) de cet axe d'articulation (16).

## Claims

1. Helicopter tail rotor comprising blades (104) and a pitch control plate (101) comprising arms (1), each of the arms (1) being connected to one of the blades (104) via a connecting rod (2), characterized in that said rotor comprises at least one mechanical assembly for transmitting force along an axis and driven by a substantially axial movement of translation under the effect of a thrust load, each of these mechanical assemblies being mounted for one of the blades (104), and comprising the arm (1) associated with said blade (104), which transmits the thrust load input movement, and the connecting rod (2) associated with said blade (104) which receives the thrust load output movement, wherein the said mechanical assembly comprises a detector (3,4,5,6) for detecting the passing of a force threshold represented by a predetermined value of the thrust load, the detector (3,4,5,6) being mounted on the arm (1) and comprising a rod (7) traversing the arm (1), a bearing flange (8) connected to the connecting rod (2) and fitted on one of the ends of the rod (7), an elastic element (9) housed in a case (30,40,50,60) in the section outside the arm (1) at the other end of the rod (7), said elastic element (9) bearing on the one hand, against the arm (1) and on the other hand, against the case (30,40,50,60), retaining means (10,11,12) holding in place the case and the rod, and an indicator part (31,41,51,61), said rod (7) and indicator part being arranged such that when the thrust load exceeds the threshold value, the thrust load acts on the elastic element (9) to modify its axial dimension allowing the indicator part (31,41,51,61) to move to a warning state.

2. Rotor as claimed in claim 1, characterized in that the indicator part (31,41) moves to the warning state under the effect of centrifugal force.

3. Rotor as claimed in claim 1, characterized in that the indicator part (51) moves to the warning state under the effect of an elastic device (53).

4. Rotor as claimed in claim 1, characterized in that the indicator part (61) moves to the warning state under the effect of the thrust load.

5. Rotor as claimed in any of the preceding claims, characterized in that the elastic element (9) of the detector for detecting the passing of a force threshold is a compression spring.

6. Rotor as claimed in any of the preceding claims, characterized in that the means for holding the rod and the case are made up of a nut (11) which screws onto the threaded end (11) of the rod (2), the nut (11) being locked and prevented from unscrewing by a pin (12).

7. Rotor as claimed in any of the preceding claims, characterized in that the modification of the axial dimension of the elastic element (9) is of a low value and limited by an absolute thrust block.

8. Rotor as claimed in claim 7, characterized in that the detector (3,4,5,6) for detecting the passing of a force threshold comprises a ferrule (20) mounted in a bore of the arm (1), and which provides a passage for the rod (7) and in which the rod (7) can slide, said ferrule (20) comprising, on the one hand, a collar (21) which bears against the corresponding surface of the arm (1) in such a way that this collar (21) receives the compression spring (9), and on the other hand, beyond the collar (21), a tubular prolongation (22) whose length is such that when the case (30,40,50,60) is in place and bearing against the flange (8), play is provided between the tubular prolongation end (22) of the ferrule (20) and the bottom inside the case (30,40,50,60).

9. Rotor as claimed in claim 8, wherein the detector (3,4,5) for detecting the passing of a force threshold comprises means for adjusting the play of this detector, which corresponds to the desired modification of the axial dimension of the elastic element (9) that allows the indicator part (31,41,51) to move to the warning state.

10. Rotor as claimed in claim 9, characterized in that the means for adjusting the play of the detector (31,41,51) for detecting the passing of a force threshold comprise an adjusting washer (13) traversed by the rod (7) and arranged between the case (30,40,50) and the elastic element (9); said washer (13) works in conjunction with the end (22) of the ferrule (20) by abutting against said end after a distance of travel corresponding to the desired modification of the axial dimension of the elastic element (9) that allows the indicator part (31,41,51) to move to the warning state.

11. Rotor as claimed in any of the preceding claims, characterized in that the indicator part (31) of the detector (3) for detecting the passing of a force threshold is made up of a circular small plate (32) traversed by the rod (7) and mounted between the flange (8) and the arm (1), said indicator part (31) being arranged inside the case (30) and comprising a tongue (33) outside of the case (30) in a plane substantially perpendicular to the circular small plate (32), this tongue (33) being situated in front of an area (34) of the case provided with a mark, such that when the thrust load exceeds the threshold value, the indicator part (31) is then freed in rotation and it turns under the effect of the centrifugal force to abut against the case (30) in a warning position corresponding to the warning state, thus exposing the area (34) of the case (30) that has the mark.

12. Rotor as claimed in any of claims 1 to 10, characterized in that the indicator part (41) of the detector (4) for detecting the passing of a force threshold is made up of a small plate (42) traversed by the rod (7) and mounted between the flange (8) and the arm (1), said indicator part (41) traversing each side of the case (40) and comprising, on the one hand, two tongues (43) in a plane substantially perpendicular to the small plate (42), and on the other hand, a stop tab (44), each of the two tongues (43) being located in front of an area (45) bearing a mark of the arm (1), the hole in the small plate (42) through which the rod (7) passes being oblong, such that when the thrust load exceeds the threshold value, the indicator part (41) is then freed and moves under the effect of the centrifugal force until the other side of the oblong hole abuts against the rod (7), in a warning position which corresponds to the warning state, thus uncovering the two marked areas (45) on the arm (1).

13. Rotor as claimed in any of claims 1 to 10, characterized in that the indicator part (51) of the detector (5) for detecting the passing of a force threshold is made up of a small plate (52) mounted in a plane substantially perpendicular to the flange (8) and which is rigidly locked to this flange (8), said small plate (52) having an elastic end (53) which is held in place by a retaining element (54) traversed by the rod (7) and mounted between the flange (8) and the arm (1), said retaining element (54) having a lipped edge (55) which retains and holds the elastic end (53) of the small plate (52) in such a way that when the thrust load exceeds the threshold value, the elastic end (53) of the indicator part (51) escapes from the retaining element (54) and moves to the warning position.

14. Rotor as claimed in any of claims 8 to 10, wherein the indicator part (61) of the detector (6) for detecting the passing of a force threshold is made up of a small plate produced from a non-ductile material of low mechanical strength and which is fixed at its two ends, on the one hand, to a prolongation (63) of the ferrule (20), and on the other end, to a prolongation (64) of the case (60), said small plate being located in a plane substantially parallel to the axis of displacement, such that when the thrust load exceeds the threshold value, the section of the indicator part (61) located between the fixing points breaks, which corresponds to the warning state.

15. Rotor as claimed in claim 14, characterized in that the small plate produced from a non-ductile material of low mechanical strength also comprises an electrical circuit which is integral with the said small plate along its longitudinal dimension such that the rupturing of this indicator part interrupts the electrical circuit and triggers a remote warning device.

16. Rotor as claimed in any of the preceding claims, characterized in that the flange (8) of the detector for detecting the passing of a force threshold comprises two branches (14) arranged substantially perpendicular to said flange (8) in such a way as to form a fork (15) to which the connecting rod (2) is fitted by means of a spindle (16) that is locked onto this fork (15) by a nut (17) with a pin (18), said fork (15) being oriented with respect ot the arm (1) of the control plate (101) by means of an orientation element (35,46,56,65).

17. Rotor as claimed in claims 13 and 16, characterized in that the indicator part (51) formed by the small plate (52) is traversed by the spindle (16) of the connecting rod (2) and is locked by the nut (17) of this spindle (16).

## Patentansprüche

1. Hubschrauber-Heckrotor, bestehend aus Drehflügeln (104) und aus einer mit Armen (1) ausgestatteten Anstellwinkelverstellscheibe (101), wobei jeder Arm (1) mittels eines Zwischengliedes (2) mit einem der Drehflügel (104) verbunden ist, dadurch gekennzeichnet, daß der Rotor über zumindest einen entlang einer Achse wirkenden Kraftübertragungsmechanismus verfügt, welcher eine unter dem Einfluß einer axialen Krafteinwirkung zustandekommende und genau axial verlaufende Translationsbewegung weitergibt, wobei pro Drehflügel (104) je ein solcher Mechanismus montiert ist, welcher den mit dem Drehflügel (104) verbundenen und die axiale Krafteinwirkung verursachenden Arm (1) sowie das mit dem Drehflügel (104) verbundene und die axiale Krafteinwirkung übernehmende Zwischenglied (2) umfaßt, wobei der Mechanismus einen Grenzwert-Überschreitungsdetektor (3, 4, 5, 6) umfaßt, dessen Grenzwert durch einen voreingestellten Wert für die axiale Krafteinwirkung dargestellt wird, wobei der Detektor (3, 4, 5, 6) auf dem Arm (1) montiert ist und eine durch den Arm (1) hindurchverlaufende Stange (7), eine mit dem Zwischenglied (2) verbundene und einem Ende der Stange (7) als Abstützung dienende Trägerscheibe (8), ein am anderen Ende der Stange (7) im Bereich außen um den Arm (1) herum in einem Gehäuse (30, 40, 50, 60) untergebrachtes Federelement (9), welches einerseits auf dem Arm (1) und andererseits auf dem Gehäuse (30, 40, 50, 60) abgestützt ist, sowie Festhaltemittel (10, 11, 12), welche das Gehäuse und die Stange in Position halten, und eine Warnanzeige (31, 41, 51 61) umfaßt, wobei die Stange (7) und die Warnanzeige (31, 41, 51, 61) in einer Weise angeordnet sind, daß, wenn die axiale Krafteinwirkung den Grenzwert überschreitet, diese auf das Federelement (9) einwirkt, um dessen Axialabmessung zu verändern, wodurch die Warnanzeige (31, 41, 51, 61) in Alarmzustand versetzt wird.

2. Rotor nach Anspruch 1, dadurch gekennzeichnet, daß die Warnanzeige (31, 41) unter dem Einfluß der Zentrifugalkraft in Alarmzustand versetzt wird.

3. Rotor nach Anspruch 1, dadurch gekennzeichnet, daß die Warnanzeige (51) unter dem Einfluß eines federnden Bauteils (53) in Alarmzustand versetzt wird.

4. Rotor nach Anspruch 1, dadurch gekennzeichnet, daß die Warnanzeige (61) unter dem Einfluß der axialen Krafteinwirkung in Alarmzustand versetzt wird.

5. Rotor nach einem der vorhergehenden Ansprüche, dadurch gekennzeichnet, daß es sich bei dem Federelement (9) des Grenzwert-Überschreitungsdetektors für die Krafteinwirkung um eine Druckfeder handelt.

6. Rotor nach einem der vorhergehenden Ansprüche, dadurch gekennzeichnet, daß die Festhaltemittel der Stange und des Gehäuses aus einer Schraubenmutter (11) bestehen, welche auf das mit einem Gewinde versehene Ende (10) der Stange (2) aufgeschraubt wird, wobei die Schraubenmutter (11) durch einen Stift (12) selbstsichernd blockiert wird.

7. Rotor nach einem der vorhergehenden Ansprüche, dadurch gekennzeichnet, daß die Veränderung der Axialabmessung des Federelements (9) nur in geringfügigem Ausmaß erfolgen kann und durch einen absoluten Anschlag begrenzt wird.

8. Rotor nach Anspruch 7, dadurch gekennzeichnet, daß der Grenzwert-Überschreitungsdetektor (3,4,5,6) für die Krafteinwirkung ein in eine Bohrung des Arms (1) eingebautes Rohr (20) umfaßt, welches die Bewegungsfreiheit der in diesem Rohr (20) gleitenden Stange (7) gewährleistet, wobei das Rohr (20) einerseits einen Abstützflansch (21) auf der entsprechenden Oberfläche des Arms (1) umfaßt, so daß dieser Flansch (21) das Federelement (9) aufnehmen kann, und andererseits über diesen Flansch (21) hinausreichend eine röhrenförmige Verlängerung (22) umfaßt, deren Länge dermaßen beschaffen ist, daß, wenn das Gehäuse (30, 40, 50, 60) auf der Trägerscheibe (8) aufsteht, zwischen dem Ende der röhrenförmigen Verlängerung (22) des Rohres (20) und der Deckelinnenseite des Gehäuses (30, 40, 50, 60) ein Spielraum freibleibt.

9. Rotor nach Anspruch 8, dadurch gekennzeichnet, daß der Grenzwert-Überschreitungsdetektor (3, 4, 5) für die Krafteinwirkung Einstellmittel für das Spiel des Detektors umfaßt, welches der erwünschten Veränderung der Axialabmessung des Federelements (9) entspricht, durch die die Warnanzeige (31, 41, 51) in Alarmzustand versetzt wird.

10. Rotor nach Anspruch 9, dadurch gekennzeichnet, daß die Einstellmittel für das Spiel des Grenzwert-Überschreitungsdetektors (31, 41, 51) für die Krafteinwirkung eine Einstellscheibe (13) umfassen, durch welche hindurch die Stange (7) verläuft und welche zwischen dem Gehäuse (30, 40, 50) und dem Federelement (9) angeordnet ist, wobei diese Einstellscheibe (13) insofern mit dem Ende (22) des Rohres (20) zusammenwirkt, als sie an dieses Ende anstößt, nachdem sie jene Strecke zurückgelegt hat, die der erwünschten Veränderung der Axialabmessung des Federelements (9) entspricht, durch welche die Warnanzeige (31, 41, 51) in Alarmzustand versetzt wird.

11. Rotor nach einem der vorhergehenden Ansprüche, dadurch gekennzeichnet, daß die Warnanzeige (31) des Grenzwert-Überschreitungsdetektors (3) für die Krafteinwirkung aus einem Rundplättchen (32) besteht, durch welches hindurch die Stange (7) verläuft und welches zwischen der Trägerplatte (8) und dem Arm (1) montiert ist, wobei diese Warnanzeige (31) im Inneren des Gehäuses (30) angeordnet ist und eine Zunge (33) umfaßt, welche sich außerhalb des Gehäuses (30) befindet und in einer genau senkrecht zu dem Rundplättchen (32) verlaufenden Ebene angeordnet ist, wobei diese Zunge (33) vor einem mit einer Markierung versehenen Bereich (34) des Gehäuses angeordnet ist, so daß, wenn die axiale Krafteinwirkung den Grenzwert überschreitet, die Warnanzeige (31) freigegeben und von der Rotationsbewegung erfaßt wird und sich unter der Einwirkung der Zentrifugalkraft dreht, bis sie in einer Alarmposition, welche dem Alarmzustand entspricht, an das Gehäuse (30) anstößt und den Bereich (34) des Gehäuses (30) freigibt.

12. Rotor nach einem der Ansprüche 1 bis 10, dadurch gekennzeichnet, daß die Warnanzeige (41) des Grenzwert-Überschreitungsdetektors (4) für die Krafteinwirkung aus einem Plättchen (42) besteht, durch welches hindurch die Stange (7) verläuft und welches zwischen der Trägerplatte (8) und dem Arm (1) montiert ist, wobei diese Warnanzeige (41) das Gehäuse (40) zu beiden Seiten durchstößt und einerseits zwei Zungen (43) umfaßt, welche in einer genau senkrecht zu dem Plättchen (42) verlaufenden Ebene angeordnet sind, und andererseits einen Halteanschlag (44) umfaßt, wobei eine jede der beiden Zungen (43) vor einem mit einer Markierung versehenen Bereich (45) des Arms (1) angeordnet ist, und wobei das in dem Plättchen (42) ausgebildete Loch für die Durchführung der Stange (7) eine längliche Form aufweist, so daß, wenn die axiale Krafteinwirkung den Grenzwert überschreitet, die Warnanzeige (41) freigegeben wird und sich unter der Einwirkung der Zentrifugalkraft bewegt, bis sie in einer Alarmposition, welche dem Alarmzustand entspricht, von der anderen Seite des länglichen Loches her an die Stange (7) anstößt und die beiden markierten Bereiche (45) des Arms (1) freigibt.

13. Rotor nach einem der Ansprüche 1 bis 10, dadurch gekennzeichnet, daß die Warnanzeige (51) des Grenzwert-Überschreitungsdetektors (5) für die Krafteinwirkung aus einem Plättchen (52) besteht, welches in einer genau senkrecht zu der Trägerplatte (8) verlaufenden Ebene angeordnet ist und aus einem Stück mit dieser Trägerplatte (8) gefertigt ist, wobei dieses Plättchen (52) über einen federnden Endabschnitt (53) verfügt, welcher von einem Festhalteelement (54) in Position gehalten wird, durch welches hindurch die Stange (7) verläuft und welches zwischen der Trägerplatte (8) und dem Arm (1) montiert ist, wobei das Festhalteelement (54) über einen knieförmig gebogenen Rand (55) verfügt, durch den der federnde Endabschnitt (53) des Plättchens (52) sicher in Position gehalten wird, so daß, wenn die axiale Krafteinwirkung den Grenzwert überschreitet, die Warnanzeige (51) über ihren federnden Endabschnitt (53) verfügt, welcher sich aus seinem Festhalteelement (54) befreit und in Alarmposition geht.

14. Rotor nach einem der Ansprüche 8 bis 10, dadurch gekennzeichnet, daß die Warnanzeige (61) des Grenzwert-Überschreitungsdetektors (6) für die Krafteinwirkung aus einem Plättchen besteht, welches aus einem nicht duktilen Material von geringem mechanischem Widerstand gefertigt ist und an seinen beiden Enden einerseits mit einer Verlängerung (63) des Rohres (20) und andererseits mit einer Verlängerung (64) des Gehäuses (60) verbunden ist, wobei dieses Plättchen in einer genau parallel zur Bewegungsachse verlaufenden Ebene angeordnet ist, so daß, wenn die axiale Krafteinwirkung den Grenzwert überschreitet, der zwischen den Befestigungspunkten liegende Abschnitt der Warnanzeige (61) zerbricht, was einen Alarmzustand bedeutet.

15. Rotor nach Anspruch 14, dadurch gekennzeichnet, daß das aus einem nicht duktilen Material von geringem mechanischem Widerstand gefertigte Plättchen (61) zusätzlich einen Stromkreis umfaßt, der auf solche Weise entlang der Längsabmessung des Plättchens verläuft, daß das Zerbrechen dieser Warnanzeige auch eine Unterbrechung des Stromkreises zur Folge hat und daß diese Unterbrechung ihrerseits eine Fern-Alarmeinrichtung auslöst.

16. Rotor nach einem der vorangegangenen Ansprüche, dadurch gekennzeichnet, daß der Grenzwert-Überschreitungsdetektor für die Krafteinwirkung über eine solche Trägerplatte (8) verfügt, welche zwei zu dieser Trägerplatte (8) im wesentlichen senkrecht verlaufende Teilstücke (14) umfaßt, die einen Gabelkopf (15) bilden, welcher das Zwischenglied (2) mittels eines Gelenkbolzens (16) aufnimmt, welcher mit Hilfe einer Schraubenmutter (17) und eines Stiftes (18) auf diesem Gabelkopf (15) befestigt ist, wobei dieser Gabelkopf (15) mit Hilfe eines Ausrichtelements (35, 46, 56, 65) entsprechend dem Arm (1) der Anstellwinkelverstellscheibe (101) ausgerichtet wird.

17. Rotor nach den Ansprüchen 13 und 16, dadurch gekennzeichnet, daß die durch das Plättchen (52) gebildete Warnanzeige (51) von dem Gelenkbolzen durchquert ist und daß die Warnanzeige von der Schraubenmutter (17) des Gelenkbolzens (16) fixiert ist.
